# EUROPÄISCHE PATENTANMELDUNG

(11) **EP 1 026 333 A2**
(43) Veröffentlichungstag der Anmeldung: **09.08.2000**
(21) Anmeldenummer: 00100798.8
(22) Anmeldetag: 15.01.2000
(51) Int. Cl.: E03F 5/16

(54) **Leichtflüssigkeitsabscheider in Kompaktbauweise**

(30) Priorität: 04.02.1999 DE 29901937 U
(71) Anmelder: PASSAVANT - ROEDIGER UMWELTTECHNIK GmbH, 65322 Aarbergen (DE)
(72) Erfinder: Bindler, Gerd-Peter, 35578 Wetzlar (DE); Middelhaufe, Axel, 65582 Diez (DE); Bach, Dieter, 65370 Allendorf (DE); Steinbach, Peter, 65594 Runkel (DE); Dambmann, Willi, 66558 Gückingen (DE)

(57) **Zusammenfassung**

Die Erfindung betrifft einen Leichtflüssigkeitsabscheider in Kompaktbauweise, insbesondere für die Abwasserbehandlung von kohlenwasserstoffbelastetem Abwasser an oder in Fahrzeughallen oder Garagen, bestehend aus einer Kleinstabscheideranlage (1) aus Stahl, Gußeisen, Kunststoff oder Verbundwerkstoff und einem der Aufnahme dieser Kleinstabscheideranlage (1) dienenden Betonbehälter (2, 3), dessen Boden (2) an der Kleinstabscheideranlage (1) angeformt ist, während das mit seiner Innenkontur der Außenkontur der Kleinstabscheideranlage (1) angepaßte Mantelelement (3a, 3b) aus mindestens zwei Betonteilen (3a und 3b) besteht.

## Beschreibung

Die Erfindung betrifft einen Leichtflüssigkeitsabscheider in Kompaktbauweise nach dem Oberbegriff des Anspruchs 1.

Derartige Abscheider werden u. a. aus Stahlbeton hergestellt. Der Beton wird in einer im voraus mit Stahlbewehrungen ausgestatteten Dauerform eingebracht und verdichtet. Nach dem Abbinden des Betons und dem Entformen des Abscheidergehäuses wird innenseitig eine Beschichtung aufgebracht, die den Beton undurchlässig und widerstandsfähig gegen Abwasserinhaltsstoffe macht. Dieses Beschichten ist sehr arbeitsintensiv, und durch das vorherige Sandstrahlen und die Verwendung von Lösungsmitteln sind spezielle Bestimmungen zur Sicherheit des Arbeitsplatzes zu beachten.

Es ist auch bekannt (DE-A1 39 04 321) aus Gußeisen, Edelstahl oder Kunststoff bestehende Abscheidergehäuse für den Einbau mit einem Betonmantel unlösbar zu umgeben. Diese Abscheider sind aufgrund ihrer Eigenmasse teilweise nur durch spezielle Transport und Hebeeinrichtungen zu bewältigen.

Die Aufgabe, diese Nachteile zu beseitigen, wird bei dem erfindungsgemäßen Leichtflüssigkeitsabscheider mit den Merkmalen des Oberbegriffs des Schutzanspruchs 1 durch die Merkmale des kennzeichnenden Teils des Schutzanspruchs 1 gelöst. Eine zweckmäßige Ausgestaltung der Erfindung ist in den Unteransprüchen angegeben. Die Vorteile der Erfindung bestehen insbesondere darin, daß der Leichtflüssigkeitsabscheider in Kompaktbauweise gegenüber herkömmlichen Bauformen eine geringere Eigenmasse aufweist und bei Herstellung, Transport, Montage und Handling zur Verringerung des Arbeitsaufwandes führt.

Ein Ausführungsbeispiel der Erfindung ist in der Zeichnung dargestellt und wird nachfolgend näher beschrieben. Es zeigen:

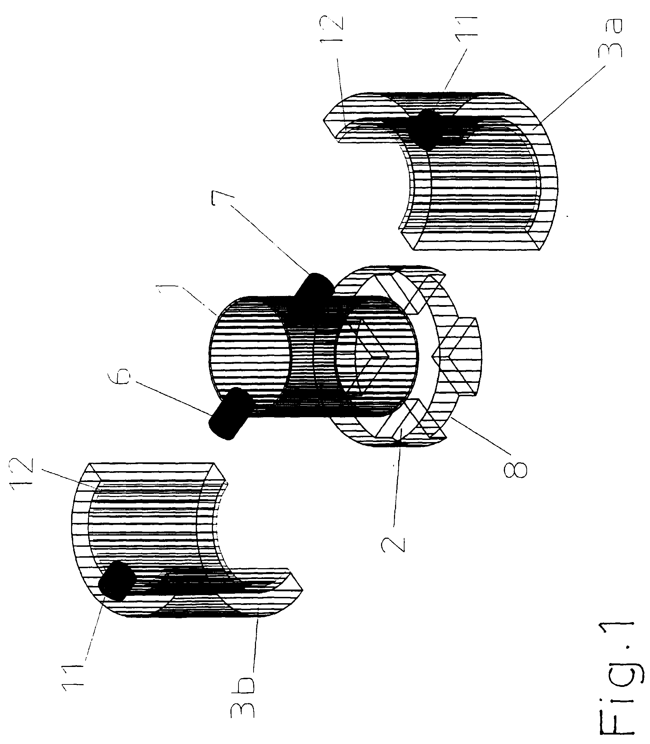

- Fig. 1: Ein Leichtflüssigkeitsabscheider in Kompaktbauweise in perspektivischer Explosions-Darstellung ohne obere Abdeckung dargestellt.

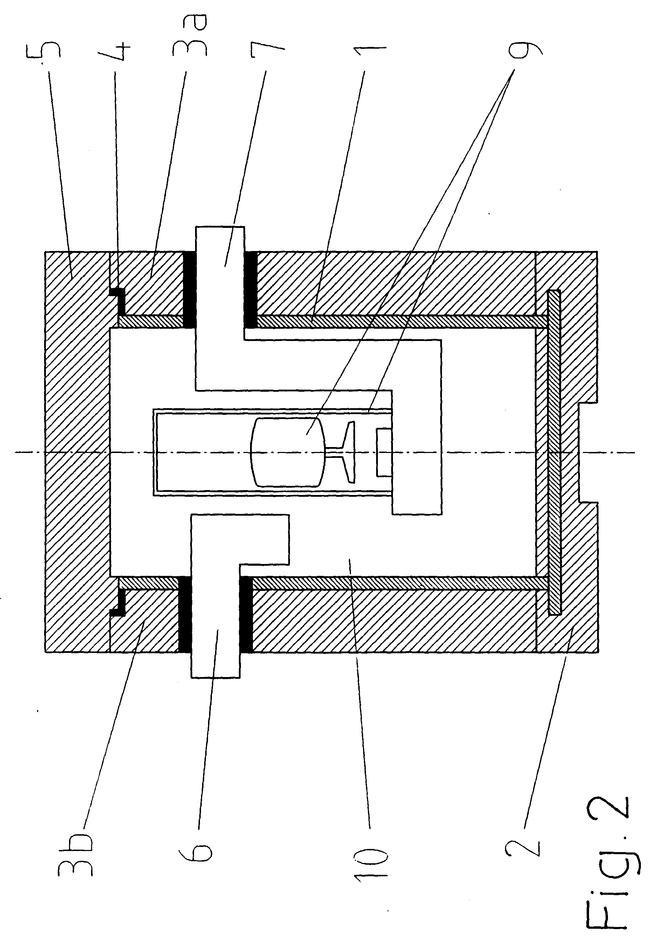

- Fig. 2: Ein Leichtflüssigkeitsabscheider in Kompaktbauweise im vertikalen Längsschnitt.

Kohlenwasserstoffbelastete Abwasser, die durch diese Leichtflüssigkeitsabscheider getrennt werden sollen, fallen z. B. in oder um Fahrzeughallen oder Garagen an. Der beispielhafte Leichtflüssigkeitsabscheider besteht aus einer Kleinstabscheideranlage 1 aus Stahl, Gußeisen, Kunststoff oder einem Verbundwerkstoff mit einem oben liegenden Abwasserzulauf 6 und einem etwa auf gleicher Höhe gegenüber dem Zulauf 6 liegenden Reinwasserablauf 7. Zwischen dem Zulauf 6 und dem Reinwasserablauf 7 liegt der Abscheideraum 10, in welchem die Leichtflüssigkeitstropfen nach oben steigen und sich an der Flüssigkeitsoberfläche sammeln. Die Leichtflüssigkeit kann von dort entfernt werden. Um die Koaleszenz der im Abwasser vorhandenen feinst dispergierten Leichtflüssigkeiten zu unterstützen, ist in dem Abscheideraum 10 als Einbauteil 9 ein Koaleszenzabscheider integriert. Neben den Leichtflüssigkeiten enthalten Abwasser auch Feinschlammteile, die entweder im unteren Teil des Abscheiders oder in einem, dem Leichtflüssigkeitsabscheider vorgeschalteten separaten Schlammfang aufgefangen werden. In diesem Fall ist eine Kleinstabscheideranlage 1 mit Betonummantelung der erfindungsgemäßen Art einsetzbar, bei welcher die Einbauteile 9 wie Koaleszenzabscheider und schwimmergesteuertes Auslaßventil nicht im Abscheideraum 10 integriert sind.

Die Betonummantelung der Kleinstabscheideranlage 1 besteht aus dem Boden 2, der an der Kleinstabscheideranlage 1 angeformt ist und dem Mantelelement 3a, 3b, welches in seiner Innenkontur der Außenkontur der Kleinstabscheideranlage 1 entspricht und aus beispielhaft zwei Betonteilen 3a und 3b erst bei der Abscheidermontage zusammengesetzt wird. Für die Aufnahme der Abwasserzulaufleitung 6 und der Reinwasserablaufleitung 7 weisen die Betonteile 3a und 3b Durchbrüche 11 auf. An der oberen Seite der Betonteile 3a und 3b des Mantelelements 3a, 3b sind Ausnehmungen 12 angeformt, die der Aufnahme eines Aufnahmeringes oder -rahmens 4 dienen, der wiederum die Anordnung einer oberen Abdeckung 5 ermöglicht. Zur besseren Bewältigung der Kleinstabscheideranlage 1 während des Transportes und der Montage sind im Boden 2 des Betonbehälters Aussparungen 8 für die Hubgabel eines Gabelstaplers vorgesehen, wobei ein Einsatz anderer Hub- bzw. Hebeeinrichtungen nicht ausgeschlossen ist.

## Patentansprüche

1. Leichtflüssigkeitsabscheider in Kompaktbauweise, insbesondere für die Abwasserbehandlung von kohlenwasserstoffbelastetem Abwasser an oder in Fahrzeughallen oder Garagen, bestehend aus einer Kleinstabscheideranlage aus Stahl, Gußeisen, Kunststoff oder Verbundwerkstoff und einem der Aufnahme dieser Kleinstabscheideranlage dienenden Betonbehälter, **dadurch gekennzeichnet**, daß der Boden (2) des Betonbehälters (2, 3) an der Kleinstabscheideranlage (1) angeformt ist, während das mit seiner Innenkontur der Außenkontur der Kleinstabscheideranlage (1) angepaßte Mantelelement (3a, 3b) aus mindestens zwei Betonteilen (3a und 3b) besteht.

2. Leichtflüssigkeitsabscheider nach Anspruch 1, **dadurch gekennzeichnet**, daß die Betonteile (3a und 3b) des Mantelelementes (3a, 3b) an ihrer oberen Seite Ausnehmungen (12) zur Aufnahme eines Aufnahmeringes oder -rahmens (4) aufweisen, der mit einer oberen Abdeckung (5) korrespondiert.

3. Leichtflüssigkeitsabscheider nach einem der Ansprüche 1 oder 2, **dadurch gekennzeichnet**, daß in die Betonteile (3a und 3b) des Mantelelementes (3a, 3b) Durchbrüche (11) für die Aufnahme der Abwasserzu- (6) und Reinwasserablaufleitung (7) integriert sind.

4. Leichtflüssigkeitsabscheider nach einem der Ansprüche 1, 2 oder 3, **dadurch gekennzeichnet**, daß am Boden (2) Aussparungen (8) für die Hubgabel eines Gabelstaplers ausgebildet sind.

5. Leichtflüssigkeitsabscheider nach einem der Ansprüche 1, 2, 3 oder 4, **dadurch gekennzeichnet**, daß die Abscheideranlage ohne die die Leichtflüssigkeitsabscheidung beeinflussenden Einbauteile (9) als vorgeschalteter Schlammfang eingesetzt werden kann.
